## Europäisches Patentamt
## European Patent Office ·
## Office européen des brevets

(19)

(11) Numéro de publication : **0 307 782 B1**

(12)

# FASCICULE DE BREVET EUROPEEN

(45) Date de publication du fascicule du brevet :
**29.05.91 Bulletin 91/22**

(51) Int. Cl.⁵ : **G01B 7/00**

(21) Numéro de dépôt : **88114603.9**

(22) Date de dépôt : **07.09.88**

(54) Palpeur pour système contacteur omnidirectionnel.

(30) Priorité : **15.09.87 CH 3556/87**

(43) Date de publication de la demande :
**22.03.89 Bulletin 89/12**

(45) Mention de la délivrance du brevet :
**29.05.91 Bulletin 91/22**

(84) Etats contractants désignés :
**DE FR GB IT**

(56) Documents cités :
**DE-A- 3 317 299**
**FR-A- 2 366 541**
**FR-A- 2 378 259**
**US-A- 4 270 275**
**US-A- 4 279 080**

(73) Titulaire : **TESA S.A.**
**Rue Bugnon 38**
**CH-1020 Renens (CH)**

(72) Inventeur : **Cassani, Alexandre**
**Avenue d'Echallens 63**
**CH-1004 Lausanne (CH)**

(74) Mandataire : **Misrachi, Alfred**
**15, Ch. de la Plantaz**
**CH-1024 Ecublens (CH)**

EP 0 307 782 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un palpeur pour système omnidirectionnel comprenant deux supports dont l'un est fixe et dont l'autre est mobile et pourvu d'une touche, un dispositif de positionnement relatif des deux supports placé entre eux et comportant une pluralité de pièces de positionnement liées à l'un des deux supports et une pluralité de pièces d'appui liées à l'autre support pour définir une position d'immobilisation relative de ces deux supports par six contacts ponctuels entre eux espacés sur 360°, et un ressort pour assurer ces six contacts ponctuels par action sur le support mobile, lesdits six contacts ponctuels déterminant six plans de tangence entre les pièces de positionnement et les pièces d'appui qui sont prévus obliques et sécants dans l'espace, le support mobile étant susceptible d'être déplacé contre l'action du ressort pour provoquer une interruption de contact entre au moins une pièce de positionnement et une pièce d'appui, et des moyens étant prévus pour détecter cette interruption.

Ce palpeur est destiné à être utilisé plus particulièrement mais cependant non exclusivement sur les machines pour la mesure tridimensionnelle d'un objet tel que par exemple une pièce mécanique usinée ou en cours d'usinage par référence à un système de mesure à trois axes de coordonnées rectangulaires.

Sur ces machines le support fixe des palpeurs est solidaire d'un dispositif de déplacement associé au système de mesure et destiné à amener la touche en contact avec un élément de l'objet à mesurer, et la position de ce support fixe est détectée par le moyen de capteurs par référence aux trois axes de coordonnées et calculée par un calculateur.

Lorsque la touche entre en contact avec l'élément de l'objet à mesurer, tout déplacement subséquent du support fixe du palpeur qui ne manque pas de se produire du fait de l'inertie du dispositif de déplacement dont il est solidaire, a pour effet de provoquer le déplacement du support mobile du palpeur auquel est fixée la touche, contre l'action du ressort, et d'engendrer ainsi une interruption de contact entre au moins une pièce de positionnement et une pièce d'appui du dispositif de positionnement relatif placé entre ces deux supports.

Cette interruption de contact, détectée sur ces machines à mesurer par des moyens électriques produisant un signal d'interruption, est utilisée principalement pour déclencher la prise de mesure, c'est-à-dire une prise de données pour le calculateur qui permet de mémoriser la position relative du support fixe atteinte à ce moment précis. Sur certaines machines de mesure, le signal d'interruption ainsi produit sert également à interrompre automatiquement le déplacement du support fixe du palpeur lorsque celui-ci est télécommandé.

En ce qui concerne le déclenchement de la prise de mesure, il est évident que la précision de la mesure effectuée est dépendante pour une grande part de la rapidité et de la précision de la réponse du dispositif de positionnement relatif des deux supports du palpeur. Il est important notamment que cette réponse soit assurée pour tous les azimuts, du fait que sur les machines précitées la mesure se fait dans les trois dimensions, par déplacements du support fixe dans les directions des trois axes de coordonnées et même, dans certaines conceptions récentes, par déplacements aléatoires dans le plan de deux de ces trois axes.

Pour assurer cette réponse pour tous les azimuts, les constructeurs appliquent divers systèmes connus en métrologie, et notamment pour certains d'entre eux les systèmes de guidage à zéro degré de liberté qui permettent d'assurer l'immobilisation relative des deux pièces par six points de contact entre elles, tels que l'emboiture trou-trait-plan de Lord Kelvin, ou le support de Boys qui consiste à appuyer trois pieds sphériques d'une pièce dans trois rainures en V disposées en étoile sur l'autre pièce.

Dans ce dernier système d'immobilisation selon Boys, les parois des trois rainures en V d'une pièce matérialisent, aux six points de contact avec les pieds sphériques de l'autre pièce, six plans de tangence obliques et sécants dans l'espace, répartis par paires de deux plans convergents, à 120° l'une de l'autre.

Un exemple d'application de ce système d'immobilisation à un dispositif de positionnement relatif entre deux supports d'un palpeur d'une machine pour la mesure tridimensionnelle est illustré par le brevet B 1 445 977.

Dans une structure de palpeur décrite dans ce brevet, six pièces d'appui sphériques coplanaires sont arrangées en trois paires espacées de 120° sur un support fixe cependant que trois pièces de positionnement cylindriques coplanaires sont arrangées en étoile à 120° l'une de l'autre sur un support mobile auquel est associée une touche dont l'extrémité est sphérique. Un ressort est mis en pression sur le support mobile pour maintenir en appui les trois pièces de positionnement cylindriques contre les trois paires de pièces d'appui sphériques par six points de contact au niveau desquels sont ainsi déterminés six plans de tangence obliques et convergents deux à deux entre pièces d'appui et pièces de positionnement.

Ce système, qui est autoajustable, donne au palpeur une surface d'appui en triangle, l'optimum étant la répartition des pièces de positionnement à 120° donnant une surface d'appui en triangle équilatéral.

De ce fait, on approxime ici la caractéristique triangulaire de la surface d'appui du palpeur par un cercle, en minimisant l'erreur (méthode des moindres carrés du calcul de probabilité).

En théorie, il est évident que l'erreur introduite par cette approximation pourrait encore être réduite en augmentant le nombre de côtés du polygone d'appui pour arriver à une surface d'appui en carré. Mais si l'on ajoute à cet effet une paire de pièces d'appui et une pièce de positionnement au système connu précité, on obtient huit points de contact pour assurer la position d'immobilisation relative des deux supports, ce qui rend le système hyperstatique et lui fait perdre son caractère d'autoajustabilité.

L'invention a pour but un palpeur à six points de contact entre les pièces d'appui et de positionnement de ses deux supports et dont lesdites pièces sont arrangées de telle sorte qu'elles forment un polygone d'appui en carré afin d'augmenter la précision de la réponse par rapport à un arrangement en triangle sans lui faire perdre son caractère d'autoajustabilité.

A cet effet, le palpeur selon l'invention, du genre cité en début d'exposé, est caractérisé en ce que le dispositif de positionnement comporte quatre pièces de positionnement réparties en croix deux à deux en opposition sur l'un des deux supports, et six pièces d'appui arrangées sur l'autre support de telle sorte que quatre d'entre elles sont disposées respectivement et par paires sous deux premières pièces de positionnement en opposition, et que les deux autres d'entre elles sont disposées respectivement et à l'unité sous les deux autres pièces de positionnement en opposition, les six plans de tangence entre pièces de positionnement et pièces d'appui étant prévus orientés de telle sorte que lorsque les deux premières pièces de positionnement en opposition sont en contact avec les deux paires de pièces d'appui respectives, le support mobile peut translater et pivoter en combinaison dans un premier plan contenant ces deux premières pièces de positionnement en opposition et pivoter autour de celles-ci, à l'encontre du ressort, jusqu'à ce qu'il atteigne la position d'immobilisation relative des deux supports, sous l'effet de rappel du ressort, dans laquelle les deux autres pièces de positionnement en opposition viennent à leur tour en contact avec les deux pièces d'appui respectives.

De la sorte, grâce à l'arrangement en croix de quatre pièces de positionnement au lieu de trois à 120°, et au partage en deux paires opposées et en deux unités opposées des six pièces d'appui au lieu de leur partage en trois paires comme dans le support de Boys et dans l'état de la technique cité, il est possible de concéder au support mobile, après qu'il ait été mis en appui sur quatre premiers points de contact, les possibilités de déplacement nécessaires et suffisantes pour lui permettre de venir ensuite également en appui sur les deux derniers points de contact sans perdre un seul des quatre premiers.

Ce système est donc à la fois autoajustant et arrangé en carré et, selon la méthode des moindres carrés, sa réponse est plus précise qu'un arrangement en triangle.

Le dessin annexé représente, à titre d'exemples, deux formes d'exécution de l'objet de l'invention, ainsi qu'une variante de la seconde forme d'exécution.

La figure 1 est une vue d'ensemble schématique en perspective de la première forme d'exécution.

La figure 2 est un schéma électrique de son circuit de détection d'interruption de contact.

La figure 3 est une vue d'ensemble schématique en perspective de la seconde forme d'exécution.

La figure 4 est une coupe partielle de la variante de la seconde forme d'exécution vue selon l'axe de coupe I-I de la figure 3.

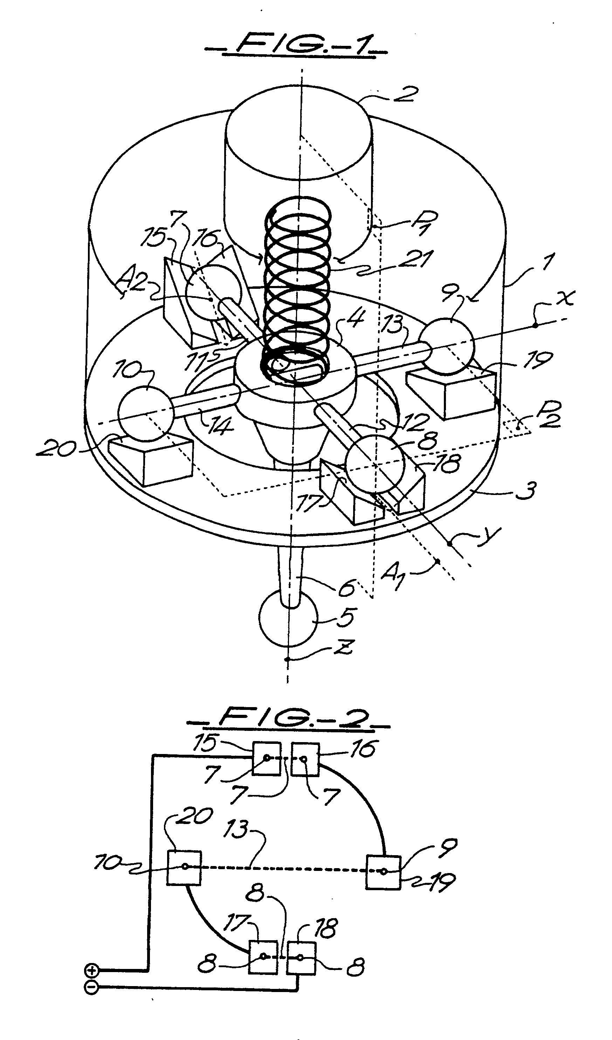

Dans ses deux formes d'exécution représentées figures 1 et 3, le palpeur est approprié à la mesure tridimensionnelle d'un objet selon trois axes de coordonnées rectangulaires figurés ici par les axes de révolution x, y et z de ses pièces mécaniques principales.

Dans la première forme d'exécution représentée figure 1, le palpeur comprend un support fixe 1 en forme de boitier cylindrique surmonté d'un bossage de fixation 2 pourvu d'un filetage non représenté, et présentant un fond 3 en forme de couronne circulaire, un support mobile cylindrique 4 pourvu d'une touche de mesure sphérique 5 centrée sur l'axe z et portée en bout d'un bras 6 débouchant du fond 3, et un dispositif de positionnement relatif de ces deux supports placé entre eux et comportant :

– quatre pièces de positionnement 7, 8, 9 et 10 à surfaces de contact sphériques, répartis en croix à 90° l'une de l'autre en bout de quatre bras 11, 12, 13, et 14 à axes concourants x et y déterminant un plan $P_2$ perpendiculaire à l'axe z et solidaires du support mobile 4, ces quatre pièces de positionnement étant ainsi deux à deux en opposition par rapport à l'axe z ;

– six pièces d'appui 15, 16, 17, 18, 19 et 20 à surfaces de contact planes et obliques par rapport au plan $P_2$, fixées sur le fond 3 du support fixe 1 et arrangées de telle sorte que quatre d'entre elles 15, 16, 17 et 18 sont disposées respectivement et par paires 15-16, 17-18, sous deux premières pièces de positionnement en opposition 7 et 8, et que les deux autres d'entre elles 19 et 20 sont disposées respectivement et à l'unité sous les deux autres pièces de positionnement en opposition 9 et 10 ;

– Un ressort de compression 21, intercalé en compression entre le support mobile 4 et le bossage 2, à l'intérieur du support fixe 1, pour presser élastiquement le support mobile contre le fond 3 du support fixe par l'intermédiaire des pièces de positionnement et d'appui du dispositif de positionnement placé entre eux, et assurer une position d'immobilisation relative entre les deux supports par six contacts ponctuels entre eux, espacés sur 360° autour de l'axe z, définis par le contact des six pièces d'appui avec les quatre pièces de positionnement.

Dans cet arrangement les inclinaisons des surfaces de contact planes des six pièces d'appui 15 à 20 sont orientées de telle sorte que lorsque les deux premières pièces de positionnement en opposition 7 et 8 sont en contact avec les deux paires de pièces d'appui respectives 15-16 et 17-18, le support mobile 4 peut translater et pivoter en combinaison dans un plan $P_1$ défini par les axes y et z et contenant ces deux premières pièces de positionnement ainsi que pivoter autour de leur axe de révolution y, à l'encontre du ressort de compression 21, et ceci jusqu'à ce qu'il atteigne la position d'immobilisation relative des deux supports, sous l'effet de rappel du ressort, dans laquelle les deux autres pièces de positionnement en opposition 9 et 10 viennent à leur tour en contact avec les deux pièces d'appui respectives 19 et 20.

Dans cette première forme d'exécution montrée figure 1 ce fonctionnement est obtenu par le fait que les six pièces d'appui 15 à 20 sont arrangées de telle sorte que :
– les surfaces de contact planes des deux pièces d'appui de chacune des deux premières paires d'entre elles 15-16 et 17-18 disposées sous les deux premières pièces de positionnement en opposition 7 et 8 sont convergentes et ont leur arête d'intersection inscrite dans le premier plan $P_1$, l'une $A_1$ des deux arêtes d'intersection ainsi définies étant parallèle et l'autre $A_2$ oblique par rapport au second plan $P_2$,
– les surfaces de contact planes des deux autres pièces d'appui 19 et 20 disposées sous les deux autres pièces de positionnement 9 et 10 sont parallèles entre elles et obliques par rapport au second plan $P_2$,
– l'arête d'intersection $A_2$ des surfaces de contact planes des deux premières pièces de positionnement 15 et 16 qui est oblique par rapport au second plan $P_2$ est sécante dans l'espace au plan des surfaces de contact planes parallèles des pièces d'appui 9 et 10.

Ainsi réalisé, le dispositif de positionnement relatif des deux supports 1 et 4 du palpeur constitue en position de repos un système de liaison à zéro degré de liberté obtenu par six points de contact entre eux, et il est autoajustable.

Ainsi, lorsque le support mobile 4 est déplacé dans la direction de l'axe de révolution y des deux pièces de positionnement 7 et 8 tout en maintenant ses quatre points de contact avec les pièces d'appui 15, 16, 17 et 18, la pièce 8 est déplacée parallèlement au fond 3 du support fixe 1 sur les surfaces de contact des pièces d'appui 17 et 18 alors que la pièce 7 monte ou descend par rapport à ce fond 3 sur les surfaces de contact des pièces d'appui 15 et 16, et ceci a pour effets respectifs d'écarter ou de rapprocher les deux pièces de positionnement 9 et 10 des pièces d'appui 19 et 20. En outre, tant que ces pièces 9 et 10 sont écartées des surfaces de contact des pièces d'appui 19 et 20, le support mobile 4 peut également et en plus pivoter autour de l'axe y.

Un raisonnement semblable peut être fait en prenant pour quatre premiers points de contact ceux définis par les pièces de positionnement 8, 9 et 10 avec les pièces d'appui 17, 18, 19 et 20. Dans ce cas, lorsque la pièce 8 est déplacée selon l'axe y sur les pièces d'appui 17 et 18, c'est la pièce 7 qui se rapproche ou s'écarte de l'une ou des deux pièces d'appui 15 et 16, par trois degrés de liberté de mouvements qui sont ici une rotation autour de la pièce 8 dans le plan $P_2$ et une rotation et translation combinée dans le plan $P_1$.

La réciproque de ce dernier raisonnement est applicable pour quatre premiers points définis par les pièces de positionnement 7, 9 et 10 maintenues en appui sur les pièces d'appui 15, 16, 19 et 20

Comme dans tous les systèmes de liaison connus à zéro degré de liberté, toute sollicitation du support mobile à l'encontre du ressort 21, par exemple à la rencontre de la touche de mesure 5 avec un objet à mesurer, a pour effet de provoquer au moins une interruption de contact sur six entre pièces de positionnement et pièces d'appui, et ceci de quelque azimut que provienne cette sollicitation.

Des moyens électriques sont prévus pour détecter cette interruption dans les buts déjà énoncés de déclencher une prise de mesure et/ou d'arrêter automatiquement le déplacement du palpeur.

Un exemple de circuit électrique de détection de cette interruption de contact est donné par le schéma de la figure 2.

Sur ce schéma les surfaces de contact des pièces d'appui 15 à 20 ont été représentées par des rectangles, les points de contact des pièces de positionnement 7 à 10 avec les pièces d'appui par des points, les liaisons électriques faites par les pièces elles-mêmes par des traits interrompus et les liaisons entre les pièces d'appui 15 à 20 par des traits pleins, ces dernières étant assurées par exemple par un circuit imprimé, non représenté, associé à un fond 3 diélectrique du boîtier 1 et relié aux bornes + et – d'un circuit d'alimentation.

Les pièces de positionnement 7 à 10 et les pièces d'appui 15 à 20 constituent l'équivalent, à leurs points de contact, de six interrupteurs montés en série dans un circuit à rupture de contact reliant les bornes + et –.

Lorsque le support mobile est en appui par ses six points de contact sur le support fixe, on a un court-circuit.

Tout mouvement relatif entre les deux supports pourra ainsi être détecté par l'ouverture de ce circuit.

Ce circuit n'est évidemment pas limitatif et l'on peut obtenir le même effet par d'autres liaisons telles que par exemple avec un circuit dans lequel sont reliées entre elles les pièces d'appui 15 et 20, 18 et 19, ainsi que les pièces de positionnement 7 et 9.

En ce qui concerne la répartition et la géométrie des pièces de positionnement et d'appui, d'autres formes d'exécution, non représentées, sont également possibles.

Ainsi la répartition de ces pièces peut être inversée, les pièces d'appui 15 à 20 étant montées sur le support mobile 4, par exemple sur un disque solidaire de ce support 4, et les pièces de positionnement 7 à 10 montées sur le fond 3 du support fixe 1.

Ainsi également, à la place du contact sphère-plan entre pièces de positionnement et pièces d'appui, on peut obtenir les mêmes effets par contact sphère-sphère, sphère-cylindre ou sphère-cône, l'important étant de n'avoir chaque fois qu'un seul point de contact entre ces pièces. Il est encore possible d'obtenir les mêmes effets par contact cylindre-cylindre et cylindre-cône, mais ici cependant sous condition que leurs axes de révolution ne soient pas parallèles.

La deuxième forme d'exécution représentée figure 3 a été retenue pour la simplicité et la fiabilité de sa conception ainsi que pour illustrer un système combiné de contacts sphère-cylindre et sphère-sphère.

Dans cette seconde forme d'exécution les pièces inchangées par rapport à la première portent les mêmes repères, telles que le support fixe 1, le moyeu et les quatre bras en croix 11 à 14 du support mobile 4, la touche de mesure 5-6 et le ressort de compression 21.

De même la répartition géométrique des pièces de positionnement et d'appui reste inchangée, seule la géométrie de leurs surfaces de contact est différente, c'est pourquoi ces pièces portent le même repère affecté de l'indice a.

Les quatre pièces de positionnement 7a à 10a comprennent trois d'entre elles 8a, 9a et 10a une surface de contact cylindrique et la quatrième 7a une surface de contact sphérique, et les six pièces d'appui 15a à 20a sont à surface de contact sphérique et constituées ici par des billes positionnées et fixées par encastrement partiel dans le fond 3a du support fixe 1.

Ces pièces de positionnement et d'appui sont arrangées de telle sorte que les plans de tangence fictifs menés aux six points de contact entre elles, qui sont représentés par des parallélogrammes en traits interrompus fins repérés T sur le dessin, sont inclinés et orientés de manière identique aux surfaces de contact planes des pièces d'appui correspondantes 15 à 20 de la première forme d'exécution représentée figure 1, et leur dimension a été volontairement rendue identique à celle de ces surfaces de contact planes, pour bien faire ressortir la similitude entre ces plans fictifs et concrets.

Dans cet arrangement, la quatrième pièce de positionnement 7a à surface de contact sphérique est prévue en contact avec l'une des deux premières paires de pièces d'appui 15a-16a dont l'arête d'intersection de leurs plans de tangence fictifs T est oblique par rapport au second plan $P_2$, comme dans l'arrangement de la première forme d'exécution.

De la sorte cette seconde forme d'exécution fonctionne de façon semblable à la première, à la nuance près toutefois que la similitude entre l'orientation des plans de tangence fictifs et des plans concrets de contact s'arrête dès qu'il y a mouvement entre les deux supports 1 et 4 du fait de la courbure des surfaces de contact des pièces d'appui 15a à 20a.

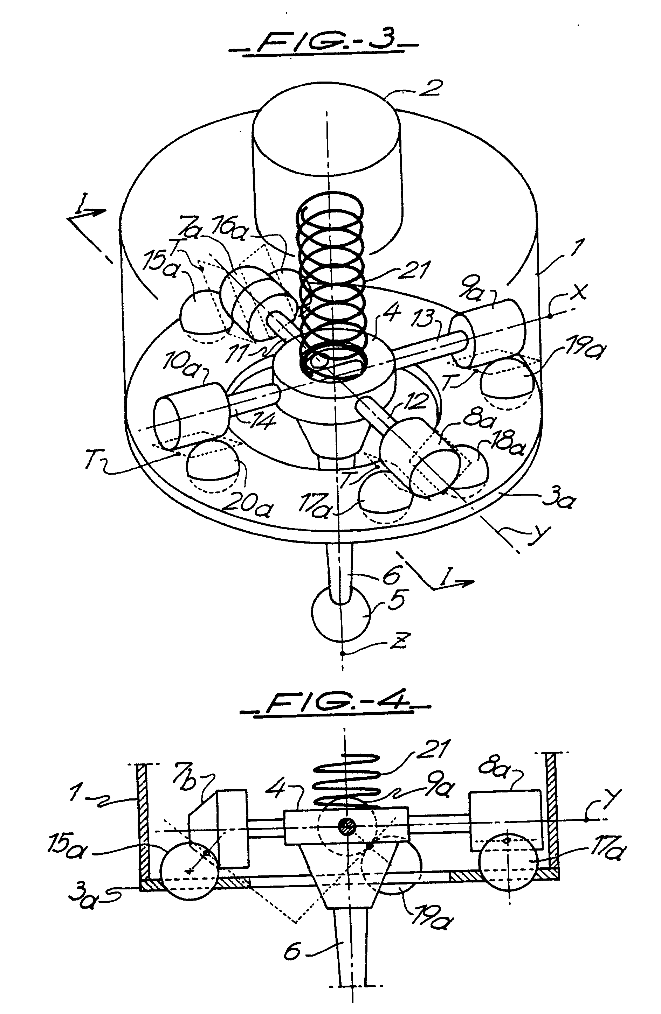

Dans la variante de cette seconde forme d'exécution représentée figure 4, la surface de contact de la quatrième pièce de positionnement 7b est conique, au lieu de sphérique comme la pièce 7a, ce qui représente encore une simplification constructive du fait que toutes les pièces à surface de contact sphérique de cette variante peuvent être constituées par des billes.

L'application du palpeur aux machines pour la mesure tridimensionnelle d'un objet n'est évidemment pas limitative, et l'invention peut être également appliquée, avec ses avantages, à tous systèmes contacteurs à plusieurs directions tels que ceux utilisés dans les commandes automatiques de machines outils, les fins de courses ou butées diverses pour lesquels une réponse précise et sensible est désirée.

## Revendications

1. Palpeur pour système contacteur omnidirectionnel comprenant deux supports (1, 4) dont l'un (1) est fixe et dont l'autre (4) est mobile et pourvu d'une touche (5), un dispositif de positionnement relatif des deux supports (1, 4) placé entre eux et comportant une pluralité de pièces de positionnement (7, 8, 9, 10) liées à l'un (4) des deux supports et une pluralité de pièces d'appui (15, 16, 17, 18, 19, 20) liées à l'autre support (1) pour définir une position d'immobilisation relative de ces deux supports (1, 4) par six contacts ponctuels entre eux espacés sur 360°, et un ressort (21) pour assurer ces six contacts ponctuels par action sur le support mobile (4), lesdits six contacts ponctuels déterminant six plans de tangence entre les pièces de positionnement (7, 8, 9, 10) et les pièces d'appui (15, 16, 17, 18, 19, 20) qui sont prévus obliques et sécants dans l'espace, le support mobile (4) étant susceptible d'être déplacé contre l'action du ressort (21) pour provoquer une interruption de contact entre au moins une pièce de positionnement et une pièce d'appui, et des moyens étant prévus pour détecter cette interruption, caractérisé en ce que le dispositif de positionnement comporte quatre pièces de positionnement (7, 8, 9, 10) réparties en croix deux à deux en opposition sur l'un (4) des deux supports, et six pièces d'appui (15, 16, 17, 18, 19, 20) arrangées sur l'autre support (1) de telle sorte que quatre (15, 16, 17, 18) d'entre elles sont disposées respectivement et par paires (15-16, 17-18) sous deux premières pièces de positionnement (7, 8) en opposition, et que chacune des deux autres (19, 20) est disposée sous l'une respective (9, 10) des deux autres pièces de positionnement (9, 10) en opposition, les six plans de tangence entre pièces de positionnement (7, 8, 9, 10) et pièces d'appui (15, 16, 17, 18, 19, 20) étant prévus orientés de telle sorte que lorsque les deux premières pièces de positionnement (7, 8) en opposition sont en contact avec les deux paires de pièces d'appui respectives (15-16, 17-18), le support mobile (4) peut translater et pivoter en combinaison dans un premier plan ($P_1$) contenant ces deux premières pièces de positionnement (7, 8) en opposition, et pivoter autour de celles-ci à l'encontre du ressort (21), jusqu'à ce qu'il atteigne la position d'immobilisation relative des deux supports (1, 4), sous l'effet de rappel du ressort (21), dans laquelle les deux autres pièces de positionnement (9, 10) en opposition viennent à leur tour en contact avec les deux pièces d'appui respectives (19, 20).

2. Dispositif selon la revendication 1, caractérisé en ce que les quatre pièces de positionnement (7, 8, 9, 10) sont disposées dans un second plan ($P_2$) à 90° l'une de l'autre et en bout de quatre bras concourants (11, 12, 13, 14) solidaires de l'un des deux supports (4), en ce que les six pièces d'appui (15, 16, 17, 18, 19, 20) sont arrangées de telle sorte que les deux plans de tangence des deux pièces d'appui de chacune des deux premières paires d'entre elles (15-16, 17-18) disposées sous les deux premières pièces de positionnement en opposition (7, 8) sont convergents et ont leur arête d'intersection inscrite dans le premier plan ($P_1$) qui est perpendiculaire au second plan ($P_2$) des deux bras concourants, l'une ($A_1$) des deux arêtes d'intersection ainsi définies étant parallèle et l'autre ($A_2$) oblique par rapport à ce second plan ($P_2$), et de telle sorte que les plans de tangence des deux autres pièces d'appui (19, 20) disposées sous les deux autres pièces de positionnement (9, 10) sont parallèles entre eux et obliques par rapport au second plan ($P_2$), l'arête d'intersection ($A_2$) des plans de tangence de l'une des deux premières paires de pièces d'appui (15-16) qui est oblique par rapport à ce second plan ($P_2$) étant sécante auxdits plans de tangence parallèles entre eux.

3. Dispositif selon la revendication 2, caractérisé en ce que les quatre pièces de positionnement (7, 8, 9, 10) ont une surface de contact sphérique, et en ce que les six pièces d'appui (15, 16, 17, 18, 19, 20) ont une surface de contact plane, les plans de tangence entre pièces de positionnement et pièces d'appui étant ainsi matérialisés par les surfaces de contact planes des pièces d'appui.

4. Dispositif selon la revendication 2, caractérisé en ce que trois (8a, 9a, 10a) des quatre pièces de positionnement comprennent une surface de contact cylindrique, et la quatrième (7a), une surface de contact sphérique, cette dernière étant prévue pour être en contact avec l'une des deux premières paires de pièces d'appui ($15_a$-$16_a$) dont l'arête d'intersection de leurs plans de tangence convergents est oblique par rapport au second plan ($P_2$), les six pièces d'appui ($15_a$, $16_a$, $17_a$, $18_a$, $19_a$, $20_a$) étant à surface de contact sphérique.

5. Dispositif selon la revendication 2, caractérisé en ce que trois (8a, 9a, 10a) des quatre pièces de positionnement comprennent une surface de contact cylindrique, et la quatrième (7b) une surface de contact conique ($7_b$), cette dernière étant prévue pour être en contact avec l'une des deux premières paires de pièces d'appui ($15_a$-$16_a$) dont l'arête d'intersection de leurs plans de tangence convergents est oblique par rapport au second plan ($P_2$), les six pièces d'appui ($15_a$, $16_a$, $17_a$, $18_a$, $19_a$, $20_a$) étant à surface de contact sphérique.

## Ansprüche

1. Fühler für omnidirektionales Kontaktsystem, mit zwei Tragkörpern (1, 4), von denen einer (1) fest und der andere (4) beweglich ist, und mit einem Taster (5), einer Vorrichtung zur relativen Einstellung der beiden Tragkörper (1,4), die zwischen diesen angeordnet ist und mehrere Einstellglieder (7, 8, 9, 10) aufweist, die mit einem der beiden Tragkörper (4) verbunden sind, und mehrere mit dem anderen Tragkörper (1) verbundene Auflagerstücke (15, 16, 17, 18, 19, 20) zum Definieren einer relativen Sperrstellung der beiden Tragkörper (1, 4) über sechs Punktkontakte, die mit Abständen auf 360° verteilt sind, und eine Feder (21) zur Sicherung dieser sechs Punktkontakte durch ihre Wirkung auf den beweglichen Tragkörper (4), wobei diese sechs Punktkontakte sechs Berührungsebenen zwischen den Einstellgliedern (7, 8, 9, 10) und den Auflagerstücken (15, 16, 17, 18, 19, 20) bestimmen, die schräg den Zwischenraum schneiden, und der bewegliche Tragkörper (4) gegen die Wirkung der Feder (21) zur Unterbrechung des Kontaktes zwischen mindestens einem Einstellglied und einem Auflagerstück verstellbar ist, und Mittel vorgesehen sind zum Erfassen dieser Unterbrechung, dadurch gekennzeichnet, daß die Einstell-Vorrichtung vier Einstellglieder (7, 8, 9, 10) aufweist, die kreuzweise, zwei und zwei gegenüberliegend, auf dem einen (4) der beiden Tragkörper verteilt sind, und sechs Auflagerstücke (15, 16, 17, 18, 19, 20), die auf dem anderen Tragkörper (1) derart angeordnet sind, daß vier (15, 16, 17, 18) von ihnen jeweils paarweise (15-16, 17-18) unter zwei ersten, gegenüberliegenden Einstellgliedern (7,8) angeordnet sind, und daß jedes der beiden anderen Auflagerstücke (19,20) unter jeweils einem der beiden anderen gegenüberliegenden Einstellglieder (9, 10) angeordnet ist, wobei die sechs Berührungsebenen zwischen den Einstellgliedern (7, 8, 9, 10) und den Auflagerstücken (15, 16, 17, 18, 19, 20) derart orientiert sind, daß, wenn die beiden ersten gegenüberliegenden Einstellglieder (7, 8) in Kontakt sind mit den entsprechenden paarweisen Auflagerstücken (15-16, 17-18), der bewegliche Tragkörper (4) in Kombination verschiebbar und schwenkbar in einer ersten Ebene ($P_1$) ist, in der sich diese ersten Einstellglieder (7, 8) gegenüberliegend befinden, und um dieselben, entgegen der Kraft der Feder (21) schwenkbar ist, bis er unter der Rückstellwirkung der Feder (21) die Position der gegenseitigen Sperrung der beiden Tragkörper (1,4) erreicht, in welcher die beiden anderen gegenüberliegenden Einstellglieder (9, 10) ihrerseits in Kontakt mit den beiden entsprechenden Auflagerstücken (19, 20) kommen.

2. Vorrichtung nach Anspruch 1, dadurch gekennzeichnet, daß vier Einstellglieder (7, 8, 9, 10) in einer zweiten Ebene ($P_2$) um 90° gegeneinander versetzt am Ende von vier durch denselben Punkt gehenden Armen (11, 12, 13,14) angeordnet sind, die mit dem einen der beiden Tragkörper (4) fest verbunden sind, daß die sechs Auflagerstücke (15,16,17,18,19,20) derart angeordnet sind, daß die beiden Berührungsebenen der beiden Auflagerstücke eines jeden der beiden ersten Paare (15-16, 17-18), die unter den beiden ersten gegenüberliegenden Einstellgliedern (7,8) angeordnet sind, sich schneiden und ihre Schnittkante in der ersten Ebene ($P_1$) liegt, die senkrecht zur zweiten Ebene ($P_2$) der beiden durch denselben Punkt gehenden Arme ist, wobei die eine ($A_1$) der beiden so definierten Schnittkanten parallel und die andere ($A_2$) geneigt ist zur zweiten Ebene ($P_2$), und derart, daß die Berührungsebenen der beiden anderen Auflagerstücke (19, 20) die unter den beiden anderen Einstellgliedern (9, 10) angeordnet sind, untereinander parallel und gegenüber der zweiten Ebene ($P_2$) geneigt sind, wobei die gegenüber dieser zweiten Ebene ($P_2$) geneigte Schnittkante ($A_2$) der Berührungsebenen des einen der beiden ersten Paare von Auflagerstücken (15-16) dieser zueinander parallelen Berührungsebenen schneidet.

3. Vorrichtung nach Anspruch 2, dadurch gekennzeichnet, daß die vier Einstellglieder (7, 8, 9, 10) eine sphärische Kontaktoberfläche haben und daß die sechs Auflagerstücke (15, 16, 17, 18, 19, 20) eine ebene Kontaktoberfläche haben, und die Berührungsebenen zwischen den Einstellgliedern und den Auflagerstücken somit verwirklicht sind durch die ebenen Kontaktoberflächen der Auflagerstücke.

4. Vorrichtung nach Anspruch 2, dadurch gekennzeichnet, daß drei (8a, 9a, 10a) der vier Einstellglieder eine zylindrische Kontaktoberfläche aufweisen und das vierte (7a) eine sphärische Kontaktoberfläche, wobei die letztere dazu bestimmt ist, mit dem einen der beiden ersten Paare der Auflagerstücke (15a-16a) in Kontakt zu stehen, bei dem die Schnittkante ihrer sich schneidenden Berührungsebenen gegenüber der zweiten Ebene ($P_2$) geneigt ist, und die sechs Auflagerstücke (15a, 16a, 17a, 18a, 19a, 20a) eine sphärische Kontaktoberfläche aufweisen.

5. Vorrichtung nach Anspruch 2, dadurch gekennzeichnet, daß drei (8a, 9a, 10a) der vier Einstellglieder eine zylindrische Kontaktoberfläche aufweisen und das vierte (7b) eine konische Kontaktoberfläche, wobei die letztere dazu bestimmt ist, mit einem der beiden ersten Paare von Auflagerstücken (15a-16a) in Kontakt zu stehen, bei denen die Schnittkante ihrer sich schneidenden Berührungsebenen gegenüber der zweiten Ebene ($P_2$) geneigt ist und die sechs Auflagerstücke (15a, 16a, 17a, 18a, 19a, 20a) eine sphärische Kontaktoberfläche aufweisen.

## Claims

1. A probe for an omnidirectional contactor system comprising two supports (1, 4), one (1) of which is stationary and the other (4) of which is movable and provided with a probe tip (5), a device for the relative positioning of the two supports (1, 4) which is placed between them and comprises a plurality of positioning members (7, 8, 9, 10) connected to one (4) of the two supports and a plurality of bearing members (15, 16, 17, 18, 19, 20) connected to the other support (1) to define a position of relative immobilisation of these two supports (1, 4) by six point contacts spaced over 360°, and a spring (21) to fix these six point contacts by acting on the movable support (4), said six point contacts determining six planes of tangency between the positioning members (7, 8, 9, 10) and the bearing members (15, 16, 17, 18, 19, 20) which are arranged obliquely and intersect in space, the movable support (4) being capable of being displaced against the action of the spring (21) to cause an interruption in contact between at least one positioning member and one bearing member, and means being provided for detecting this interruption, characterised in that the positioning device comprises four positioning members (7, 8, 9, 10) which are arranged in a cross, in opposite pairs, on one (4) of the two supports, and six bearing members (15, 16, 17, 18, 19, 20) arranged on the other support (1) such that four (15, 16, 17, 18) of them are arranged respectively in pairs (15-16, 17-18) beneath the first two opposing positioning members (7, 8) and in that each of the other two of them (19, 20) is arranged beneath a respective one (9, 10) of the other two opposing positioning members (9, 10), the six planes of tangency between positioning members (7, 8, 9, 10) and bearing members (15, 16, 17, 18, 19, 20) being orientated such that, when the first two opposing positioning members (7, 8) are in contact with the two respective pairs of bearing members (15-16, 17-18), the movable support (4) can translate and pivot in combination in a first plane ($P_1$) containing these first two opposing positioning members (7, 8) and can pivot about them against the action of a spring (21) until it reaches the position of relative immobilisation of the two supports (1, 4) against the restoring force of the spring (21), in which the other two opposing positioning members (9, 10) in turn come into contact with the two respective bearing members (19, 20).

2. A device according to claim 1, characterised in that the four positioning members (7, 8, 9, 10) are arranged in a second plane ($P_2$) at 90° to one another and at the end of four concurrent arms (11, 12, 13, 14) integral with one of the two supports (4), in that the six bearing members (15, 16, 17, 18, 19, 20) are arranged such that the two planes of tangency of the two bearing members of each of the first two pairs of them (15-16, 17-18) arranged beneath the first two opposing positioning members (7, 8) are convergent, with their intersecting edge inscribed in the first plane ($P_1$) which is perpendicular to the second plane ($P_2$) of the two concurrent arms, one ($A_1$) of the two intersecting edges thus defined being parallel and the other ($A_2$) oblique to this second plane ($P_2$), and in such a way that the planes of tangency of the other two bearing members (19, 20) arranged beneath the other two positioning members (9, 10) are parallel to one another and are oblique to the second plane ($P_2$), the intersecting edge ($A_2$) of the planes of tangency of one of the first two pairs of bearing members (15-16), which is oblique to this second plane ($P_2$), intersecting said planes of tangency which are parallel to one another.

3. A device according to claim 2, characterised in that the four positioning members (7, 8, 9, 10) have a spherical contact surface, and in that the six bearing members (15, 16, 17, 18, 19, 20) have a planar contact surface, the planes of tangency between positioning members and bearing members thus being embodied by the planar contact surfaces of the bearing members.

4. A device according to claim 2, characterised in that three (8a, 9a, 10a) of the four positioning members comprise a cylindrical contact surface and the fourth (7a) a spherical contact surface, this fourth surface being designed to be in contact with one of the first two pairs of bearing members (15a-16a), the intersecting edge of whose convergent planes of tangency is oblique to the second plane ($P_2$), the six bearing members (15a, 16a, 17a, 18a, 19a, 20a) having a spherical contact surface.

5. A device according to claim 2, characterised in that three (8a, 9a, 10a) of the four positioning members comprise a cylindrical contact surface and the fourth (7b) a conical contact surface (7b), this conical contact surface being designed to be in contact with one of the first two pairs of bearing members (15a-16a), the intersecting edge of whose convergent planes of tangency is oblique to the second plane ($P_2$), the six bearing members (15a, 16a, 17a, 18a, 19a, 20a) having a spherical contact surface.

## _FIG.-1_

## _FIG.-2_

_FIG.-3_

_FIG.-4_